# EUROPÄISCHE PATENTANMELDUNG

(11) **EP 0 791 872 A1**
(43) Veröffentlichungstag der Anmeldung: **27.08.1997**
(21) Anmeldenummer: 97102418.7
(22) Anmeldetag: 14.02.1997
(51) Int. Cl.: G05B 19/406, G05B 9/02

(54) **Einrichtung und Verfahren zur Überwachung von Kupplungen und/oder Riemengetrieben bei Achsen oder Spindeln an Werkzeugmaschinen, Robotern oder dergleichen**

(30) Priorität: 27.02.1996 DE 19607358
(71) Anmelder: SIEMENS AKTIENGESELLSCHAFT, 80333 München (DE)
(72) Erfinder: Forster, Gerhard, 90592 Pfeifferhütte (DE)

(57) **Zusammenfassung**

Es wird eine Einrichtung sowie ein Verfahren zur Überwachung von Kupplungen und/ oder Riemengetrieben bei Achsen oder Spindeln an Werkzeugmaschinen, Robotern oder dergleichen geschaffen, in der durch eine Auswertung der positiven Drehzahldifferenz Δn pro Zeiteinheit und des aktuellen Beschleunigungsmomentes (B) ein aktuelles Trägheitsmoment (T) ermittelt wird. Diese wird kontinuierlich mit dem Motorträgheitsmoment (M) und dem Gesamtträgheitsmoment (G) mit der Achse bzw. Spindel verglichen. Entspricht das aktuelle Trägheitsmoment (T) dem des Antriebes bei weitem nicht dem des Gesamtträgheitsmomentes (G), so wird der Antrieb sofort mit einer Fehlermeldung stillgesetzt.

## Beschreibung

Die Erfindung betrifft eine Einrichtung sowie ein Verfahren zur Überwachung von Kupplungen und/oder Riemengetrieben bei Achsen oder Spindeln an Werkzeugmaschinen, Robotern oder dergleichen.

Bei Werkzeugmaschinen, Robotern oder anderen Handhabungssystemen werden regelmäßig Umsetzvorgänge zwischen den verwendeten Antrieben und den davon angetriebenen Achsen oder Spindeln vorgenommen. Die Kopplung zwischen Achsen oder Spindeln und dem Antrieb erfolgt dabei zumeist über mechanische Kupplungen oder ein Riemengetriebe. Wie andere Elemente einer Werkzeugmaschine oder eines Roboters sind auch diese einer hohen Belastung ausgesetzt und unterliegen einem hohen Verschleiß. Im Fehlerfall besteht die Gefahr, daß die Steuerung einer Werkzeugmaschine oder eines Roboters aufgrund veränderter Belastungsbedingungen, beispielsweise bei Bruch in der Kupplung oder einem Riß des Riemengetriebes, die dadurch verursachten veränderten Belastungsverhältnisse fehlinterpretiert und neben dem durch den Bruch entstanden Schaden an der Maschine Änderungen vornimmt. Vor allem bei Werkzeugmaschinen oder Robotern mit indirekten Meßsystemen (das Lagemeßsystem ist direkt am Antrieb angebracht) entstehen bei Kupplungs- oder Riemenbruch bei Bahninterpolation extreme Bahnabweichungen. Da sich der Geber mit dem Antrieb weiterbewegt, wird der Stillstand der Mechanik, z.B. einer defekten Achse, nicht erkannt. Eine solche Bahnabweichung führt in der Regel zu Werkstück und Maschinenschäden. Darüber hinaus kann dies auch Gefahren für das die Maschine bediente Personal herbeiführen. Aus diesem Grund müssen Kupplung oder Riemengetriebe bei Achsen oder Spindeln an Werkzeugmaschinen oder Robotern ständig auf ordnungsgemäße Funktionen überwacht werden.

Herkömmlicherweise erfolgt eine solche Überwachung durch den Einsatz von mechanischen Überwachungselementen. Diese sind jedoch sehr teuer, unterliegen wie Kupplungen und Riemengetriebe ebenfalls einem Verschleiß und sind darüber hinaus, aufgrund ihres Platzbedarfes, mit konstruktivem Aufwand bei der Konzeption einer Werkzeugmaschine oder eines Roboters verbunden.

Der vorliegenden Erfindung liegt daher die Aufgabe zugrunde, eine Einrichtung zur Überwachung von Kupplungen und Riemengetrieben bei Achsen oder Spindeln zu schaffen, welche auf den Einsatz zusätzlicher und kostenintensiver mechanischer Überwachungselemente verzichtet und so den zu einer Überwachung erforderlichen Aufwand verringert. Dies soll durch steuerungsinterne Maßnahmen herbeigeführt werden.

Diese Aufgabe wird durch eine Einrichtung mit den folgenden Merkmalen gelöst:
1.1 es sind Mittel zur Bestimmung eines aktuellen Trägheitsmoments jeder Achse oder Spindel vorgesehen,
1.2 für jede Achse oder Spindel ist in einem Speichermittel der Wert des Motorträgheitsmoments des diese Achse oder Spindel treibenden Antriebes eingespeichert,
1.3 für jede Achse oder Spindel ist in einem Speichermittel der Wert des Gesamtträgheitsmoments dieser Achse oder Spindel eingespeichert,
1.4 es sind Mittel zum Vergleichen des aktuellen Trägheitsmoments jeder Achse oder Spindel mit dem Motorträgheitsmoment des diese Achse oder Spindel treibenden Antriebes vorgesehen,
1.5 es sind Mittel zum Vergleichen des aktuellen Trägheitsmoments jeder Achse oder Spindel mit dem Gesamtträgheitsmoment dieser Achse oder Spindel vorgesehen,
1.6 es sind Mittel zum Stillsetzen eines Antriebes im Falle einer Übereinstimmung seines Motorträgheitsmoments mit dem zugehörigen aktuellen Trägheitsmoment und gleichzeitiger/oder alternativer über einem vorgebbaren Schwellwert liegender Abweichung des aktuellen Trägheitsmoments vom Gesamtträgheitsmoment der zugehörigen Achse oder Spindel vorgesehen.

In einer ersten vorteilhaften Ausgestaltung der Einrichtung gemaß der vorliegenden Erfindung wird erreicht, daß die Elemente zur Realisierung einer solchen Überwachungseinrichtung noch weiter in die Steuerung integriert werden können, wodurch sich der erforderliche Aufwand weiter reduzieren läßt. Dies wird durch folgendes weiteres Merkmal erreicht:
2.1 jedes Speichermittel ist in Form eines Maschinendatums einer numerischen Steuerung ausgeprägt.

In einer weiteren vorteilhaften Ausgestaltung der Einrichtung gemäß der vorliegenden Erfindung wird diese dahingehend weiter entwickelt, daß die Bestimmung eines aktuellen Trägheitsmoments auf besonders einfache Art und Weise erfolgt. Dies läßt sich durch folgendes weiteres Merkmal erreichen:
3.1 es sind Mittel zur Erfassung einer Drehzahl für jede Achse oder Spindel vorgesehen.

Eine zusätzliche Erleichterung zur Bestimmung des aktuellen Trägheitsmomentes wird in einer weiteren vorteilhaften Ausgestaltung der Einrichtung gemäß der vorliegenden Erfindung durch folgendes weiteres Merkmal herbeigeführt:
4.1 es sind Mittel zur Bestimmung eines aktuellen Beschleunigungsmoments für jede Achse oder Spindel aus dem zugehörigen Stromistwert einer Steuerung vorgesehen.

In einer weiteren vorteilhaften Ausgestaltung der Einrichtung gemäß der vorliegenden Erfindung, wird das aktuelle Trägheitsmoment auf besonders effektive Weise mit wenigen zusätzlichen Elementen aus den bereitstehenden Größen gebildet, ohne daß der dazu erforderliche Rechenaufwand die Steuerung so sehr belastet, daß ihre Leistungsfähigkeit eingeschränkt wird. Dies wird durch folgendes weiteres Merkmal erreicht:
5.1 es ist ein Rechenmittel vorgesehen, welches das aktuelle Trägheitsmoment jeder Achse oder Spindel aus einer erfaßten positiven Drehzahldifferenz pro vorgebbarer Zeiteinheit während eines Beschleunigungsvorganges und dem aktuellen Beschleunigungsmoment bestimmt.

In einer weiteren vorteilhaften Ausgestaltung der Einrichtung gemäß der vorliegenden Erfindung wird erreicht, daß im Fehlerfall neben einer Stillsetzung des betroffenen Antriebes auch eine Warnung für das Bedienpersonal erfolgt. Dies geschieht durch folgendes weiteres Merkmal:
6.1 es sind Signalisierungsmittel für den Fall einer erforderlichen Stillsetzung einer Achse oder Spindel vorgesehen.

Um eine Einrichtung der im vorangehenden dargestellten Art auf einfache Art und Weise zu betreiben, wird die Aufgabe einer Überwachung von Kupplungen und/oder Riemengetrieben bei Achsen oder Spindeln an Werkzeugmaschinen, Robotern oder dergleichen, mit folgenden Verfahrensschritten besonders vorteilhaft gelöst:
7.1 es wird das aktuelle Trägheitsmoment jeder Achse oder Spindel ermittelt,
7.2 das aktuelle Trägheitsmoment wird mit dem Motorträgheitsmoment des diese Achse oder Spindel treibenden Antriebes verglichen,
7.3 es wird geprüft, ob das aktuelle Trägheitsmoment für jede Achse oder Spindel das Gesamtträgheitsmoment dieser Achse oder Spindel um mehr als einen vorgebbaren Schwellwert unterschreitet,
7.4 im Falle einer Übereinstimmung nach Verfahrensschritt 7.2 und/oder erfülltem Kriterium nach Verfahrensschritt 7.3 wird der die betreffende Achse oder Spindel antreibende Antrieb stillgesetzt.

In einer vorteilhaften Ausgestaltung des Verfahrens gemäß der vorliegenden Erfindung wird das aktuelle Trägheitsmoment auf einfache Weise durch die Wahl besonders geeigneter Parameter ermittelt:
8.1 das aktuelle Trägheitsmoment wird durch Auswertung der positiven Drehzahldifferenz pro Zeiteinheit und des aktuellen Beschleunigungsmomentes des betreffenden Antriebs ermittelt.

Die mit der Erfindung zu erzielenden Vorteile bestehen insbesondere darin, daß zur Überwachung von Kupplungen und/oder Riemengetrieben bei Achsen oder Spindeln in Werkzeugmaschinen, Robotern oder dergleichen auf den Einsatz von kostenintensiven mechanischen Überwachungselementen verzichtet werden kann, der dadurch erforderliche konstruktive Aufwand bei der Konzeption einer solchen Maschine entfällt und die Gefahren, die sich aus dem Verschleiß solcher mechanischer Überwachungselemente ergeben, vermieden werden können. Die Einrichtung zur Überwachung wird in eine vorhandene Steuerung verlagert und erfolgt durch geschickte Verknüpfung von durch wenig Aufwand zu ermittelnden, ohnehin bereitstehenden Steuerungsparametern. Die Einrichtung kann komplett in eine vorhandene numerische Steuerung integriert werden. Neben einer Stillsetzung eines betroffenen Antriebes im Fehlerfall erfolgt zusätzlich eine Warnung für den Bediener einer solchen betroffenen Maschine.

Weitere erfinderische Einzelheiten ergeben sich aus der nachfolgenden Beschreibung eines Ausführungsbeispiels in Verbindung mit der in der Figur gezeigten Darstellung. Es zeigt:

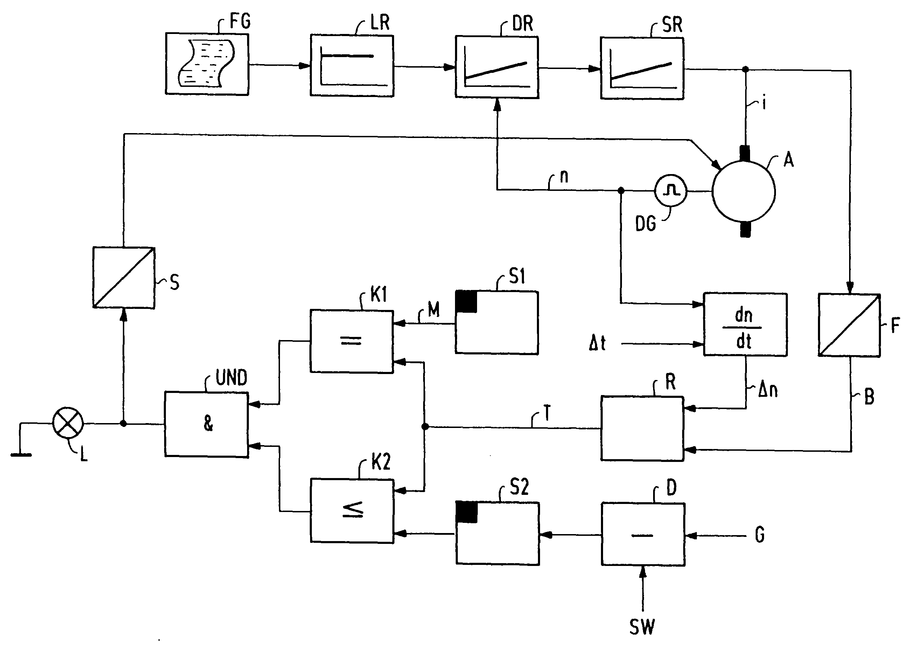

- FIG 1: Schaltungsanordnung zur Realisierung einer Überwachungseinrichtung, welche in eine vorhandene numerische Steuerung eingebunden ist.

In der Darstellung gemäß FIG 1 ist eine Schaltungsanordnung einer Überwachungseinrichtung gezeigt, welche in eine bereits vorhandene numerische Steuerung integriert ist. Dabei werden zu Steuerungszwecken ohnehin bereitstehende Parameter durch geeignete schaltungstechnische Mittel so aufbereitet, daß eine Überwachung von Kupplungen und/oder Riemengetrieben bei Achsen oder Spindeln mit geringem Aufwand ermöglicht wird. Die bereits vorhandene numerische Steuerung ist in der Darstellung gemäß FIG 1 in Form einer Regelungsstruktur bestehend aus einem Führungsgrößengeber FG, einem Lageregler LR, einem Drehzahlregler DR und einem Stromregler SR gezeigt. Der am Ausgang des Stromreglers SR anstehende Stromistwert i ist zu einem Antrieb A geführt. Am Antrieb ist ein Drehzahlgeber DG vorgesehen über welchen die Drehzahl n ermittelt und zum Drehzahlregler DR zurückgeführt wird.

Zur Bestimmung eines aktuell gültigen Trägheitsmomentes T sind Mittel zur Erfassung der positiven Drehzahldifferenz Δn pro einer vorgebbaren Zeiteinheit Δt gezeigt. Dieses Mittel, welches sich dn/dt bezeichnet ist, ist eingangsseitig mit dem vom Drehzahlgeber DG erfaßten Drehzahlwert n und einer vorgebbaren Zeiteinheit Δt beaufschlagt. Ausgangsseitig steht die erfaßte positive Drehzahldifferenz Δn an.

Aus dem vom Stromregler SR gelieferten Stromistwert i wird über eine weitere Funktionseinheit F das aktuelle Beschleunigungsmoment B bestimmt. Dieses wird gemeinsam mit der positiven Drehzahldifferenz Δn zu einer Recheneinheit R geführt, in der daraus das aktuelle Trägheitsmoment T ermittelt wird.

Dieses jeweils aktuelle Trägheitsmoment T wird nun eingangsseitig auf zwei Komparatoren K1 und K2 geschaltet. Als Vergleichswert für den Komparator K1 dient das Motorträgheitsmoment M des Antriebs A, welches beispielsweise im unbelasteten Zustand des Antriebes ermittelt wurde oder aber aufgrund von Herstellerangaben für den Antrieb A bereits bekannt ist. Dieses Motorträgheitsmoment M ist in einem Speichermittel S1 eingespeichert, welches vorteilhafterweise in Form eines Maschinendatums einer numerischen Steuerung realisiert ist. Dadurch ergibt sich der Vorteil, daß keine zusätzlichen Bauelemente benötigt werden. Mit Hilfe des Komparators K1 wird somit überprüft, ob das errechnete aktuelle Trägheitsmoment T mit dem Motorträgheitsmoment M übereinstimmt. Ist dies der Fall, so führt der Ausgang des Komparators K1 High-Pegel.

Der Komparator K2 wird neben dem aktuellen Trägheitsmoment T mit dem Gesamtträgheitsmoment G der Achse bzw. Spindel verglichen. Dabei erfolgt jedoch keine Überprüfung auf Gleichheit, sondern es wird geprüft, ob das aktuelle Trägheitsmoment T bei weitem nicht dem Gesamtträgheitsmoment G entspricht. Dazu wird von dem Gesamtträgheitsmoment G ein vorgebbarer Schwellwert SW in einem Differenzierer D abgezogen und die Differenz in einem Speicher S2 gespeichert, welcher wiederum vorteilhafterweise als Maschinendatum einer numerischen Steuerung ausgebildet ist. In dem Komparator K2 wird nunmehr verglichen, ob das aktuelle Trägheitsmoment T kleiner oder gleich dem Gesamtträgheitsmoment G abzüglich des Schwellwertes SW ist. Für einen solchen Fall wird der Ausgang des Komparators K2 auf High-Potential geschaltet.

Sowohl eine Übereinstimmung des aktuellen Trägheitsmomentes mit dem normalerweise nur im Leerlauf eines Antriebs vorhandenen Motorträgheitsmoment als auch das erhebliche Unterschreiten des Gesamtträgheitsmomentes, wobei die Erheblichkeit über den Schwellwert SW einstellbar ist, durch das aktuelle Trägheitsmoment T sind ein Indiz für einen Kupplungs- oder Riemenbruch. Die Ausgänge der beiden Komparatoren K1 und K2 sind zu einem logischen Gatter geführt. Im vorliegenden Ausführungsbeispiel ist dies ein logisches UND-Gatter UND, welches für den Fall, daß beide Kriterien erfüllt sind, also beide Komparatoren K1 und K2 ein Hight-Potential führen, durchschaltet. Damit wird eine Fehlermeldung also nur für den Fall ausgelöst, daß beide Kriterien erfüllt sind.

Das logische Gatter läßt sich jedoch auch in Form eines ODER-Gatters ausgestalten, was zur Folge hat, daß bereits das Zutreffen eines der Kriterien der beiden Komparatoren K1 oder K2 zum Auslösen eines Fehlersignales ausreicht. Für den letztgenannten Fall ist die Ansprechschwelle der Überwachungseinrichtung somit schärfer als im erstgenannten Fall.

Der Ausgang des logischen Gatters UND ist zum einen zu einem Mittel S zum Stillsetzen des Antriebes A, zum anderen einem Signalisierungsmittel in Form einer Lampe L geführt. Das Signalisierungsmittel kann jedoch nicht nur eine optische Signalisierung sondern alternativ auch eine akustische und eine anders geartete Signalisierung vornehmen. Das Mittel zum Stillsetzen des Antriebes kann in einer mechanischen Bremseinrichtung bestehen oder beispielsweise in einem Schütz, welcher den Antrieb A von der Stromversorgung abtrennt. Selbstverständlich sind auch beide Maßnahmen denkbar. Eine weitere Maßnahme zum Stillsetzen des Antriebes durch das Mittel S wird darin bestehen, daß ein entsprechender Stillsetzungswert auf die numerische Steuerung aufgeschaltet wird. Um die Sicherheit zu erhöhen, können auch alle Maßnahmen miteinander kombiniert werden.

Alle in der vorstehenden Beschreibung erwähnten bzw. in der Figur dargestellten Merkmale sollen, sofern der bekannte Stand der Technik dies zuläßt, für sich allein oder in Kombination als unter die Erfindung fallenden angesehen werden. Die vorstehende Beschreibung der bevorzugten Ausführungsform nach der Erfindung ist zum Zwecke der Illustration angegeben. Diese ist nicht erschöpfend bzw. die Erfindung ist nicht auf die genau, angegebene Form beschränkt, sondern es sind zahlreiche Modifikationen und Änderungen im Rahmen der vorstehend angegebenen Lehre möglich. Die bevorzugte Ausführungsform wurde gewählt, um die prinzipiellen Einzelheiten der Erfindung und die praktischen Anwendungen zu verdeutlichen, so daß der Fachmann in der Lage ist, die Erfindung zu realisieren. Zahlreiche bevorzugte Ausgestaltungsformen und weitere Modifikationen kommen bei speziellen Anwendungsgebieten in Betracht. Der Schutzgedanke der Erfindung soll nur durch die anliegenden Ansprüche bestimmt sein.

## Patentansprüche

1. Einrichtung zur Überwachung von Kupplungen und/oder Riemengetrieben bei Achsen oder Spindeln an Werkzeugmaschinen, Robotern oder dergleichen, mit folgenden Merkmalen:
1.1 es sind Mittel (R) zur Bestimmung eines aktuellen Trägheitsmoments (T) jeder Achse oder Spindel vorgesehen,
1.2 für jede Achse oder Spindel ist in einem Speichermittel (S1) der Wert des Motorträgheitsmoments (M) des diese Achse oder Spindel treibenden Antriebes (A) eingespeichert,
1.3 für jede Achse oder Spindel ist in einem Speichermittel (S2) der Wert des Gesamtträgheitsmoments (G) dieser Achse oder Spindel eingespeichert,
1.4 es sind Mittel (K1) zum Vergleichen des aktuellen Trägheitsmoments (T) jeder Achse oder Spindel mit dem Motorträgheitsmoment (M) des diese Achse oder Spindel treibenden Antriebes (A) vorgesehen,
1.5 es sind Mittel (K2) zum Vergleichen des aktuellen Trägheitsmoments (T) jeder Achse oder Spindel mit dem Gesamtträgheitsmoment (G) dieser Achse oder Spindel vorgesehen,
1.6 es sind Mittel (S) zum Stillsetzen eines Antriebes (A) im Falle einer Übereinstimmung seines Motorträgheitsmoments (M) mit dem zugehörigen aktuellen Trägheitsmoment (T) und gleichzeitiger/oder alternativer über einem vorgebbaren Schwellwert (SW) liegender Abweichung des aktuellen Trägheitsmoments (T) vom Gesamtträgheitsmoment (G) der zugehörigen Achse oder Spindel vorgesehen.

2. Einrichtung nach Anspruch 1, mit folgendem weiteren Merkmal:
2.1 jedes Speichermittel (S1, S2) ist in Form eines Maschinendatums einer numerischen Steuerung ausgeprägt.

3. Einrichtung nach Anspruch 1 oder 2, mit folgendem weiteren Merkmal:
3.1 es sind Mittel (DG) zur Erfassung einer Drehzahl (n) für jede Achse oder Spindel vorgesehen.

4. Einrichtung nach Anspruch 1, 2 oder 3, mit folgendem weiteren Merkmal:
4.1 es sind Mittel zur Bestimmung eines aktuellen Beschleunigungsmoments (B) für jede Achse oder Spindel aus dem zugehörigen Stromistwert (i) einer Steuerung vorgesehen.

5. Einrichtung nach Anspruch 3 und 4, mit folgendem weiteren Merkmal:
5.1 es ist ein Rechenmittel (R) vorgesehen, welches das aktuelle Trägheitsmoment (T) jeder Achse oder Spindel aus einer erfaßten positiven Drehzahldifferenz (Δn) pro vorgebbarer Zeiteinheit (Δt) während eines Beschleunigungsvorganges und dem aktuellen Beschleunigungsmoment (B) bestimmt.

6. Einrichtung nach einem der vorangehenden Ansprüche, mit folgendem weiteren Merkmal:
6.1 es sind Signalisierungsmittel (L) für den Fall einer erforderlichen Stillsetzung einer Achse oder Spindel vorgesehen.

7. Verfahren zur Überwachung von Kupplungen und/oder Riemengetrieben bei Achsen oder Spindeln an Werkzeugmaschinen, Robotern oder dergleichen, mit folgenden Verfahrensschritten:
7.1 es wird das aktuelle Trägheitsmoment (T) jeder Achse oder Spindel ermittelt,
7.2 das aktuelle Trägheitsmoment (T) wird mit dem Motorträgheitsmoment (M) des diese Achse oder Spindel treibenden Antriebes (A) verglichen,
7.3 es wird geprüft, ob das aktuelle Trägheitsmoment (T) für jede Achse oder Spindel das Gesamtträgheitsmoment (G) dieser Achse oder Spindel um mehr als einen vorgebbaren Schwellwert (SW) unterschreitet,
7.4 im Falle einer Übereinstimmung nach Verfahrensschritt 7.2 und/oder erfülltem Kriterium nach Verfahrensschritt 7.3 wird der die betreffende Achse oder Spindel antreibende Antrieb stillgesetzt.

8. Verfahren nach Anspruch 7, mit folgendem weiteren Verfahrensschritt:
8.1 das aktuelle Trägheitsmoment (T) wird durch Auswertung der positiven Drehzahldifferenz Δn pro Zeiteinheit und des aktuellen Beschleunigungsmomentes (B) des betreffenden Antriebs ermittelt.
